Europäisches Patentamt

European Patent Office

Office européen des brevets

(19)

(11) Veröffentlichungsnummer: **0 057 748**
A2

(12) **EUROPÄISCHE PATENTANMELDUNG**

(21) Anmeldenummer: **81108079.5**

(22) Anmeldetag: **08.10.81**

(51) Int. Cl.³: **H 04 N 1/26**
**H 04 N 1/04**

(30) Priorität: **10.02.81 DE 3104606**

(43) Veröffentlichungstag der Anmeldung:
**18.08.82 Patentblatt 82/33**

(84) Benannte Vertragsstaaten:
**AT BE CH DE FR GB IT LI LU NL SE**

(71) Anmelder: **GRUNDIG E.M.V. Elektro-Mechanische
Versuchsanstalt Max Grundig & Co. Kg.
Kurgartenstrasse 37
D-8510 Fürth/Bayern(DE)**

(72) Erfinder: **Mayer, Walter, Dipl.-Phys.
Hermann Löns Strasse 32b
D-8502 Zirndorf(DE)**

(74) Vertreter: **Voigt, Günter
Kurgartenstrasse 37
D-8510 Fürth(DE)**

(54) **Anordnung zur Mikrofilm-Telekommunikation.**

(57) Es wird eine Anordnung zur Mikrofilm-Telekommunikation beschrieben, die aus einem Mikrofilm- bzw. Mikrofiche-Vorratsbehälter (14), einer Filmbühne (11) mit Lichtgeber (12), einer steuerbaren Transporteinrichtung für Mikrofilm- bzw. Mikrofiche sowie einer Abbildungsoptik (20) besteht. Das von der Abbildungsoptik (20) stammende Bild jeweils einer Abtastzeile wird auf einem lineren Halbleiter-Sensorelement (10) abgebildet und als elektrisches Zeilen-Videosignal mit relativ niedriger Frequenz einem Bildwiederholspeicher (15) zugeführt und dort gespeichert. Nach Abspeicherung des Gesamt-Video-signals wird dieses in jeweils günstigster Organisation und mit gewünschter Frequenz beliebig oft ausgelesen. Zur Anpassung der Abtastbereiche an Vor- und Rücklauf des Mikrofilms (13) bzw. des Mikrofiches (25) ist ein kippbarer Spiegel im Strahlengang zwischen Filmbühne und linearem Halbleiter-Sensorelement angeordnet. Die Transporteinrichtung ermöglicht ein zeilenweises Abtasten einer (21) von insgesamt mehreren Seiten auf dem Mikrofiche (25) von oben nach unten und ein Abtasten der seitlich benachbarten Seite (22) zeilenweise von unten nach oben.

FIG.1

EP 0 057 748 A2

ANORDNUNG ZUR MIKROFILM-TELEKOMMUNIKATION

BESCHREIBUNG

Die Erfindung bezieht sich auf eine Anordnung zur Mikrofilm-Telekommunikation gemäß Oberbegriff des Anspruchs 1.

Überall dort, wo bereits in Schriftform vorliegende große Informationsmengen auf geringem Raum zu archivieren sind, spielt heute und in absehbarer Zukunft der Mikrofilm als Speichermedium eine wichtige Rolle. Das zu archivierende Material in Form von Schriftstücken, Drucken, Zeichnungen, Tabellen und Suchbäumen wird beim Mikrofilmverfahren mittels einer automatischen Fotokamera in zwanzig- bis vierzigfacher Verkleinerung auf sogenannte Mikrofiches oder auf 16-mm-Filmmaterial in Spulen oder Kassetten abgespeichert. Nach Prüfung der Mikroverfilmung können die Originale vernichtet werden. Der sich damit ergebende Platzgewinn ist ganz erheblich. Gegenüber der konventionellen Aufbewahrung der Originalunterlagen liegt der Platzbedarf bei weniger als einem Prozent. Das Gewicht des Archivmaterials verringert sich auf etwa ein Prozent.

Durch zusätzliche Einsparungen beim Suchvorgang sowie wegen der geringeren Kosten für Büromöbel und Raum lassen sich für die Mikrofilmarchivierung beachtliche Kostenvorteile errechnen. Die Bedeutung des Mikrofilms als Informationsträger ist deshalb mit überdurchschnittlichen Zuwachsraten ständig steigend.

Der Zugriff zu einer bestimmten Information aus einem Mikrofilmarchiv vollzieht sich in der Regel in folgenden Schritten:

1. Selektion des Mikrofilmfiches aus einer Kartei oder der Mikrofilmkassette aus einem Ablageregal nach vorgegebenem sach- oder adressenbezogenem Schlüssel,

2. Einlegen des Mikrofiches oder der Kassette in ein Lesegerät und manuelles bzw. automatisches Aufsuchen des gewünschten Einzeldokumentes, Auswertung der auf der Mattscheibe des Betrachtungsgerätes sichtbaren Rückprojektion und

3. Anfertigung einer Rückvergrößerung im Originalformat durch den mit dem Lesegerät verbundenen Kopierautomaten bei Bedarf.

Bei kompletten Geräten nach neuestem Stand der Technik läßt sich der Suchvorgang auch durch EDV derart steuern, daß die Beleg-/Dokumenten-Merkmale und ihre Standorte auf Disketten-Speichern abgelegt werden, so daß der Suchvorgang sich auf dem Datenbildschirm vollzieht und der Zugriff zur Einzelinformation auf der Kassette automatisch abläuft. Der in der Kassette aufbewahrte Mikrofilm ist dann mit einer Codierung versehen, die die Voraussetzung für den automatischen Suchlauf bietet.

Weitergehende Beschreibungen des heutigen Standes der Technik finden sich z. B. in der Zeitschrift "Industrie Magazin", November 79, Seite 160 und in den Druckschriften der Firmen 3 M, Bell & Howell, Agfa Gevaert, Minolta usw.

Mikrofilmarchive in Industrie, Technik, Handel, Dienstleistungssektor, Wissenschaft und öffentlicher Verwaltung sind meist Zentraleinrichtungen, die eine große Zahl räumlich verstreut angesiedelter Bedarfsträger bedienen sollen. Das anwendungsspezifische Problem beim heutigen Stand der Technik besteht darin, daß der Transport der Rückvergrößerung eines ausgewählten Dokumentes auf konventionellem Wege per Hauspost, Rohrpost, öffentlicher Post oder Faksimileübertragung erfolgt. Dadurch entstehen Zeitverluste und lohnintensiver Arbeitsaufwand. Ein weiteres Problem besteht darin, daß beim Vorgang der Selektion aus dem Archiv der eigentliche Bedarfsträger sich nicht einschalten kann und somit wegen unvollständiger oder ungenügend differenzierter Nomenklatur Selektionsergebnisse vorgelegt bekommt, die nicht seinen eigentlichen Wunschvorstellungen entsprechen. Auch dies kann wiederum in vielen Fällen zusätzlichen Lohn- und Zeitaufwand verursachen.

Im Rahmen moderner Telekommunikationstechnologien besteht offensichtlich eine Lücke im Hardware-Angebot derart, daß die Übertragung des auf dem Projektionsschirm des Mikrofilmlesegerätes dargestellten Schriftstückes über vorhandene Fernmeldekanäle nicht möglich ist. Wäre dies möglich, so könnte vom Bildschirmterminal des Bedarfsträgers aus die Selektion der gewünschten Information mit absoluter Sicherheit gesteuert werden. Darüber hinaus könnte die Anfertigung der gewünschten Rückvergrößerung am Bildschirmterminal des Bedarfsträgers durchgeführt werden, so daß der Transport des Schriftstückes oder aber die zusätzliche Benutzung eines Faksimilegerätes entfallen könnte, was erhebliche Kostenvorteile mit sich brächte.

Voraussetzung für die Lösung dieses Problems ist zunächst die fotoelektrische Abtastung der Mikrofilmvorlage im jeweiligen Archiv mit einem derartigen Auflösungsvermögen, daß alle Einzelheiten der archivierten Information in ein elektrisches Signal überführt werden und auf einem entsprechend hoch auflösenden Bildschirm am Empfangsort wiedergegeben werden können. Das für diese Problemlösung erforderliche Auflösungsvermögen ist aus der Technik der Faksimileübertragung bekannt. Es muß bei mindestens sieben Linien pro mm (bezogen auf die Originalvorlage) liegen. Dies entspricht einem Punktraster (bezogen auf die Schmalseite einer DIN-A 4 Seite) von wenigstens 1700 Rasterpunkten. Bisherige Versuche, dieses Problem durch Kombination einer Fernsehkamera mit einem Mikrofilmlesegerät zu lösen, brachten nicht den gewünschten Erfolg. Fernsehkameras mit Aufnahmeröhren dieses Auflösungsvermögens benötigen sehr aufwendige Spezialröhren. Das physikalisch bedingte größere Volumen dieser Spezialaufnahmeröhren führt zu Fernsehkameras, die mit einem Mikrofilmlesegerät in praktisch brauchbarer Form nicht kombinierbar sind. Im übrigen sind die Kosten für eine derartige hochauflösende Spezial-Fernsehkamera in einer Größenordnung, die eine Amortisation des technischen Aufwandes im praktischen Betrieb nahezu ausschließt.

Der Erfindung liegt die Aufgabe zugrunde, eine Vorrichtung zu schaffen, die mit relativ geringem technischen Aufwand eine Umwandlung des optischen Bildes des Mikrofilmes bzw. des Mikrofiches in ein elektrisches Bildsignal ermöglicht. das auch über relativ schmalbandige Kanäle übertragen werden kann.

Erfindungsgemäß wird diese Aufgabe durch die im kennzeichnenden Teil des Anspruchs 1 angegebenen Maßnahmen gelöst.

Vorteilhafte Weiterbildungen ergeben sich aus den Unteransprüchen.

Die Erfindung wird nachfolgend unter Bezugnahme auf die Zeichnungsfiguren beispielsweise erläutert. Es zeigen:

Fig. 1    eine schematische Darstellung der
          Anordnung und

Fig. 2    eine schematische Darstellung eines Mikrofiches mit schematischer
          Darstellung der senkrecht zu den
          Zeilen der einzelnen Seiten verlaufenden Vorschubrichtung der
          Mikrofiche-Transporteinrichtung.

Die zeilenweise Abtastung von Schriftvorlagen mittels Halbleiter-Zeilen-Sensorelement 10 ist aus der Faksimiletechnik bekannt. Ein moderner linearer Halbleiter-Zeilensensor mit 1728 Sensor-Einzelelementen ist ein außerordentlich kompaktes Bauelement mit einer Chip-Größe von beispielsweise 1,1 x 27,6 mm, mit 22-pin-DIP-Gehäuse hat das Bauelement äußere Abmessungen in der Größenordnung von 30 x 15 x 2 mm.

Aus diesen Abmessungen ist erkennbar, daß die Kombination dieses Sensorelementes 10 mit einem Mikrofilm-Lesegerät zu einer praktisch brauchbaren Problemlösung führen kann, die allen bisherigen Versuchen mit konventionellen Fernsehkameras weit überlegen ist. Dies deshalb, weil das kleine Sensorelement 10 ohne Beeinträchtigung des sonstigen Funktionsablaufs in das Lesegerät eingebaut werden kann. Die Abtastung erfolgt dabei derart, daß die ohnehin für die Projektion auf die Mattscheibe des Lesegerätes erforderliche Durchleuchtung der Filmbühne 11 mittels einer Filmleuchte 12 beispielsweise derart ausgenutzt wird, daß zumindest ein Teil des Lichts mittels eines teildurchlässigen Spiegels abgezweigt wird. Während das Sensorelement 10 selbst durch Anlegen eines bestimmten Taktsignals die Abtastung des Mikrofilms in einer Dimension übernimmt, wird die Abtastung in der anderen Dimension in der von den Filmabtastern bekannten Weise durch die Bewegung des Filmmaterials 13 erreicht. Bei Verwendung einer Mikrofilmspule 14 vollzieht sich dieser Abtastvorgang am übersichtlichsten dadurch, daß die Transportvorrichtung des Lesegerätes den Film 13 über die Filmbühne 11 bewegt, womit die jeweilige flächenhafte Information lückenlos über das lineare Sensorelement 10 geführt wird. Dabei ist der Abtasttakt des Sensorelements selbstverständlich in geeigneter Weise mit der Bewegung des Films 13 zu verkoppeln, so daß sich Abtastzeile an Abtastzeile fügt.

Das bei einer solchen Abtastung gewonnene Videosignal ist jedoch für eine Bildschirmwiedergabe zunächst noch nicht geeignet, weil es einerseits im Rahmen des Abtastvorganges nur einmalig zur Verfügung steht und weil es andererseits in seinem zeitlichen Verlauf mit konventionellen Videosignalen nicht übereinstimmt.

Dieses Problem wird durch die Anwendung eines an sich bekannten Bildwiederholspeichers 15 gelöst, der nach dem heutigen Stand der Technik vorzugsweise aus Halbleiter-Speicherelementen besteht, wobei allerdings eine Speicherkapazität in der Größenordnung von 4 Mbit erforderlich ist. Im Hinblick auf die heute schon recht niedrigen Speicherplatzpreise und insbesondere im Hinblick auf die für die Zukunft erkennbare fallende Tendenz der Preise ist diese Lösung praktikabel. Dies gilt insbesondere deshalb, weil das bei der Mikrofilmabtastung gewonnene Videosignal nur die beiden Signalpegel schwarz oder weiß repräsentiert, so daß sich ein Analog-Digital-Wandler erübrigt. Neben der Anwendung von Halbleiter-Elementen für den Bild-Wiederholspeicher 15 ist jedoch auch eine Lösung auf der Basis von Magnetplatten oder Magnetfolien gemäß den deutschen Patenten 21 18 429 oder 28 41 543 denkbar.

Die Einspeicherung des Videosignals in einen Bildwiederholspeicher bietet folgende Vorteile:

a. Auslesen des Videosignals nach einer Abtastnorm, die ggf. eine Bilddrehung sowie die
flimmerfreie Wiedergabe auf einem hochauflösenden Monitorbildschirm gestattet,

b. Aktualisierung des jeweiligen Speicherinhalts
nach Maßgabe des zuletzt abgetasteten Mikrofilmbildes und

c. Auslesen der Information aus dem Speicher in
geeigneter Organisation und erforderlichem
Zeitablauf mit verlangsamter Bildwiederholfrequenz (verlängerter Bildperiode) derart,
daß sich eine Signalbandbreite ergibt, die
dem verfügbaren Übertragungskanal bzw. dem
nachfolgenden Hardcopy-Gerät angepaßt ist.

Im Suchlauf vollzieht sich folgender Vorgang: Nach Durchlauf eines Mikrofilmbildes vor dem linearen Sensorelement
10, ist die Bildinformation im Bildwiederholspeicher 15
systematisch abgelegt und wird mit Hilfe einer Prozeßsteuerung 15a jeweils bei der Abtastung des nachfolgenden Bildes aktualisiert bzw. ausgetauscht. Der Speicherinhalt repräsentiert jeweils genau das, was auf der
Mattscheibe des Mikrofilmlesegerätes sichtbar ist. Für
die Wiedergabe auf einem angeschlossenen Fernsehmonitor
15b, 16 bzw. 17 wird der Bildwiederholspeicher 15 mit geeigneter Abtastfrequenz laufend ausgelesen. Steht nur ein schmalbandiger Nachrichtenkanal für die Übertragung zur Verfügung, so wird das Bildsignal zunächst schmalbandig vom Bildwiederholspeicher 15 zu Zwischenspeichern 18 bzw. 19 mit Prozeßsteuerungen 18a bzw. 19a geleitet. Aus den Speichern 15, 18 bzw. 19 wird dann nach vollständiger Übermittlung des zu einem bestimmten Bild gehörenden Videosignals dieses Videosignal beliebig oft ausgelesen. Bei hinreichend breitbandigem Übertragungskanal ist die Möglichkeit gegeben, den Suchvorgang auf dem Monitor 16 bzw. 17 zu verfolgen. Nach Auffinden des gewünschten Mikrofilmbildes wird der Filmtransport gestoppt. Damit bleibt auch der Inhalt des Speichers 15 konstant. Dieser Inhalt steht dann für die Übertragung zu einem abgesetzten Terminal 16, 17 zur Verfügung. Der Lesetakt kann so gewählt werden, daß sich eine Videobandbreite ergibt, die den Möglichkeiten der vorhandenen Übertragungskanäle angepaßt ist. Als Übertragungskanal kann jeder geeignete Nachrichtenkanal infrage kommen, ggf. auch ein Telefonkanal.

Dies wird nachfolgend näher erläutert. Bei einer Auflösung von acht Linien pro mm (bezogen auf das Originalformat) erhält man bei 50 Hz Bildfrequenz eine Videosignalbandbreite von etwa 100 MHz. Diese Signalbandbreite läßt sich zwar örtlich für die Bildwiedergabe auf einem hochauflösenden Monitor verarbeiten, für die Signalübertragung ist sie aber wegen des damit verbundenen Aufwandes zu hoch. Für die Signalübertragung ist aber auch eine Bildfrequenz von 50 Hz nicht erforderlich. Eine Frequenz von etwa 2 Hz ist durchaus praxisgerecht. Die empfängerseitig verfügbare Bildinformation könnte dann innerhalb von 0,5 sec jeweils erneuert werden, d. h. die Wartezeit läge in einer praktisch vernachlässigbaren Größenordnung. Die damit erzielbare Bandbreitenreduktion entspricht dem Faktor 25 und ist damit ganz erheblich. Statt 100 MHz sind nur noch 4 MHz zu übertragen. Somit sind konventionelle Übertragungseinrichtungen für Normfernsehsignale verwendbar.

Durch die aus der Faksimiletechnik bekannte Run-Length-Codierung ist nochmals ein Redundanzentzug möglich, der eine Bandbreitenreduzierung um wenigstens den Faktor 5 erlaubt. Falls es erforderlich sein sollte, könnte aber auch unter Beibehaltung der Signalbandbreite die Bildfrequenz erhöht werden.

Durch die Verwendung eines Bildwiederholspeichers ist der "Austausch zwischen Bildfrequenz und Bandbreite" durch Veränderung des Lesetaktes in weiten Grenzen möglich, wodurch die optimale Anpassung an den jeweils vorgegebenen Anwendungsfall erleichtert wird. Generell ist die Bandbreite eine Funktion der Bild- und Zeilenfrequenz. Eine Erniedrigung der Bild- und Zeilenfrequenz führt auch zu einer Reduktion der erforderlichen Bandbreite.

Um den bildlichen Informationsaustausch etwa bei der Arbeit an Suchbäumen oder Explosionszeichnungen zu erleichtern, kann in das gespeicherte und/oder zu übertragende Bildsignal eine verschiebbare Markierung, z.B. ein helles Dreieck, eingeblendet werden. Durch eine solche Markierung bestimmter Bildpartien wird der möglicherweise zugleich stattfindende auditive Informationsaustausch über Telefon oder Sprechanlage wirkungsvoll ergänzt. Die Übertragung der Position der Marke erfolgt über einen Schmalband-Zwei-Weg-Datenkanal.

Die Umwandlung der Mikrofilm-Bildinformation in ein Videosignal und die Ablage in einem Bildwiederholspeicher bietet außer der Möglichkeit der Fernübertragung noch einen weiteren interessanten Vorteil. Wird nämlich eine Rückvergrößerung des Mikrofilmbildes in Form einer Hardcopy gewünscht, dann kann auf die bisher üblichen fotochemischen Verfahren verzichtet werden. Da das Videosignal mit praktisch beliebiger Geschwindigkeit und in praktisch beliebiger Organisation aus dem Speicher ausgelesen werden kann, ist der Anschluß eines Matrixdruckers oder eines Faksimilegerätes zur Anfertigung einer Hardcopy möglich.

Es muß davon ausgegangen werden, daß die auf dem Mikrofilm festgehaltenen Dokumente sowohl in Transportrichtung des Films als auch senkrecht dazu zeilenmäßig bedruckt sein können. Bei gleichbleibender Filmabtastrichtung hätte dies dann auf dem Monitor eine um 90 $^o$ verdrehte Wiedergabe zur Folge. Die Lesbarkeit würde erschwert bis unmöglich. Eine zur normalen Zeilenablenkung orthogonale Ablenkung ist technisch schwierig zu realisieren, weil wegen des großen Frequenzunterschiedes die Ablenkspulen für Zeilen- und Rasterfrequenz elektrisch völlig unterschiedlich dimensioniert sind. Eine recht umständliche Drehung der Bildröhre oder des Monitors kommt nicht ernsthaft infrage.

Der Bildwiederholspeicher 15 bietet hier eine sehr vorteilhafte Lösung des Problems. Bei geeigneter Organisation des Schreib- und Lesevorganges gestattet der Bildwiederholspeicher eine Bilddrehung um 90 $^o$. Dazu wird der mit dem Videosignal des Zeilensensors 10 systematisch in Richtung der Abtastzeilen gefüllte Bildwiederholspeicher durch ein entsprechendes Leseprogramm orthogonal zur Schreibrichtung ausgelesen. Es ergibt sich der gleiche Effekt, den beim konventionellen Mikrofilmlesegerät das Drehen der Filmbühne bewirkt, nämlich die Darstellung des Dokumentes auf dem Bildschirm in lesegerechter Lage. Um eine Solche um 90 $^o$ gedrehte Wiedergabe auf dem Monitor 16 bzw. 17 zu ermöglichen, wird der Bildschirm dann bei normaler Wiedergabe nicht in voller Breite genutzt, sondern es verbleiben links und rechts der jeweils wiedergegebenen Bildseite ungenutzte Streifen.

Ein gewisses Problem resultiert daraus, daß die Zeilenabtastung - bezogen auf den Durchlauf des Films - in der Filmbühne des Lesegerätes immer am Bildanfang erfolgen muß, damit der Inhalt des Bildwiederholspeichers 15 in der gewünschten Weise aktualisiert werden kann und ständig mit dem auf einem etwa vorhandenen optischen Wiedergabegerät sichtbaren Bild übereinstimmt. Da aber der Filmtransport im Suchlauf vor- und rückwärts erfolgt, muß die auf dem Mikrobild abgetastete Zeile in Abhängigkeit von der Laufrichtung um die Ausdehnung der Filmbühne 11 verstellt werden. Dies kann durch einen im optischen Strahlengang zur Lichtteilung erforderlichen halbdurchlässigen Spiegel geschehen, der je nach Filmlaufrichtung gekippt wird, so daß die Abtastzeile an der richtigen Stelle des Mikrobildes liegt. Es können aber auch zwei - auf die beiden Randzeilen der Filmbühne 11 ausgerichtete - Sensorelemente 10 vorgesehen werden.

In vielen Fällen wird es sich als vorteilhaft erweisen, auf das konventionelle Lesegerät völlig zu verzichten. Die Abtastung des Films 13 erfolgt dann ebenfalls in der beschriebenen Weise, wobei auf eine Strahlenteilung für Projektion und fotoelektrische Abtastung verzichtet werden kann. In einem solchen Fall besteht das Lesegerät nur aus dem Abtaster, dem erwähnten Bildwiederholspeicher 15 und einem Monitor 16 sowie ggf. einem angeschlossenen Drucker oder Fernkopierer für die Hardcopy-Ausgabe.

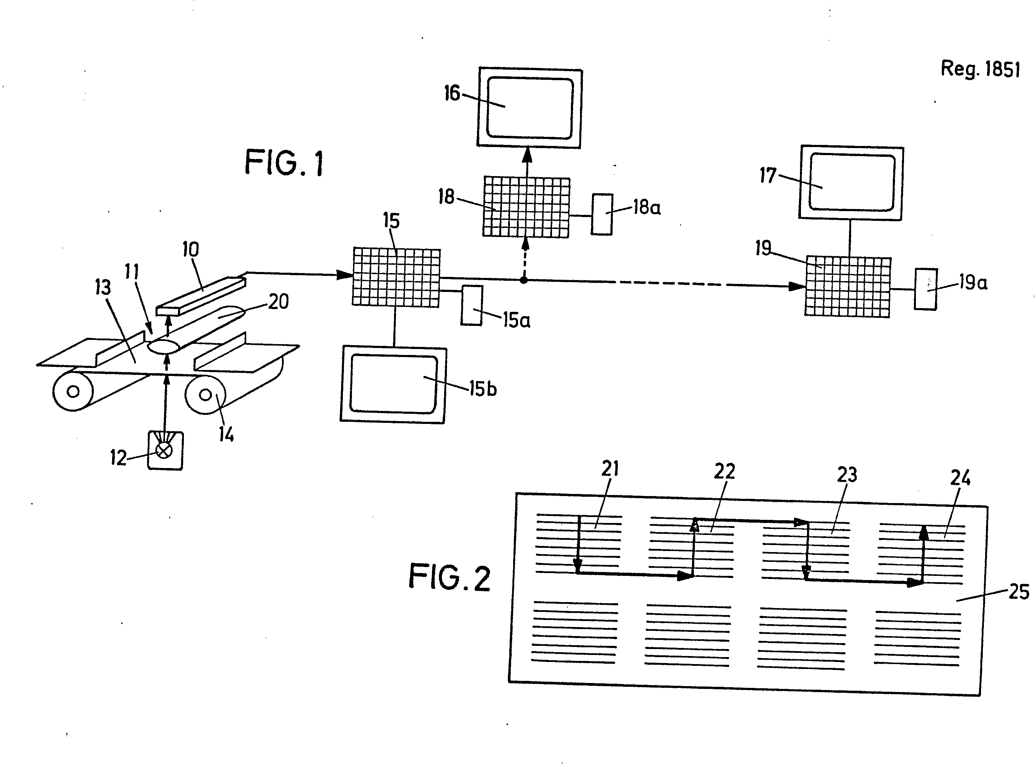

Die Abtasteinrichtung wird dadurch sehr vereinfacht. Sie besteht nur noch aus der Einrichtung für den Filmtransport - ggf. mit automatischem Suchlauf - und der Filmbühne 11 mit Beleuchtungseinrichtung bzw. Lichtgeber 12, wobei über der Filmbühne 11 ein Objektiv 20 und das Sensorelement 10 angeordnet sind. In einem solchen Fall ist eine Veränderung der Position der Abtastzeile in Abhängigkeit von der Filmlaufrichtung nicht mehr notwendig. Die Filmdurchleuchtung kann sich auf eine schmale Zone entsprechend der vom Sensorelement 10 erfaßten Zeile beschränken. Die Beobachtung des Suchvorganges und die Selektrion der gewünschten Information erfolgt nur noch auf dem Bildschirm des Monitors 16. Soll das beschriebene Verfahren zum Auslesen von Mikrofiches 25 verwendet werden, dann ist es vorteilhaft, den Suchvorgang so zu systematisieren, daß wegen der flächenhaften Abtastung im wesentlichen nur Bewegungen der Mikrofiches 25 senkrecht zur Abtastzeile möglich sind. Dies kann durch motorische oder manuelle Bewegung des Filmschlittens über der Beleuchtungsbühne erfolgen. Dabei erfolgt die Bewegung gemäß Pfeilrichtung in Fig. 2 senkrecht zur Zeilenabtastrichtung in Mäanderform. Die Bewegungsgeschwindigkeit wird durch einen Tachogeber erfaßt, der den Abtasttakt des Sensorelements 10 für ein lückenloses Aneinanderreihen der Abtastzeilen steuert. Durch die mäanderförmige Verschiebung des Filmschlittens ergibt sich natürlich eine wechselnde Raster-Abtastrichtung. Die erste Abtast-

zeile liegt einmal unten und ein anderes Mal oben auf dem Mikrobild. Durch eine entsprechende Organisation des Schreibvorganges beim Bildwiederholspeicher kann dies ohne Schwierigkeiten berücksichtigt werden.

Da das bereits beschriebene Mikrofilm-Terminal 16, 17 mit einem Zwischenspeicher 18, 19 versehen ist, kann es sowohl als Sende- als auch als Empfangsstation verwendet werden. Der Unterschied besteht im Prinzip dann nur darin, daß im Sendefall der Bildwiederholspeicher 15 vom vom Sensorelement 10 gefüllt und sodann für die Monitorwiedergabe und Signalübertragung ausgelesen wird, während im Empfangsfall der Bildwiederholspeicher 15 oder einer der Zwischenspeicher 18, 19 über den Übertragungskanal aufgefüllt und sodann für die Monitorwiedergabe und ggf. für den Druckvorgang ausgelesen wird.

Um die Kommunikation zwischen Sende- und Empfangsstelle zu erleichtern, kann es vorteilhaft sein, einen zusätzlichen Rückkanal vorzusehen, über den ein Informationsaustausch in der umgekehrten Richtung möglich ist. Selbstverständlich kann auch der ohnehin vorhandene Nachrichtenkanal als Zwei-Weg-Kanal ausgebildet werden. Für die auditive Informationsweiterleitung ist in vielen Fällen ein zusätzlicher Sprechkanal von Vorteil.

– 1 –

ANORDNUNG ZUR MIKROFILM-TELEKOMMUNIKATION

PATENTANSPRÜCHE

1. Anordnung zur Mikrofilm-Telekommunikation, bestehend aus einem Mikrofilm- bzw. Mikrofiche-Vorratsbehälter (14), einer Filmbühne (11) mit Lichtgeber (12), einer steuerbaren Transporteinrichtung für Mikrofilm- bzw. Mikrofiche sowie einer Abbildungsoptik (20), d a d u r c h   g e k e n n z e i c h n e t ,   daß das von der Abbildungsoptik (20) stammende Bild jeweils einer Abtastzeile auf einem linearen Halbleiter-Sensorelement (10) abgebildet und als elektrisches Zeilen-Videosignal mit relativ niedriger Frequenz einem Bildwiederholspeicher (15) zugeführt und dort gespeichert wird, aus dem es dann nach Abspeicherung des Gesamt-Videosignals in jeweils günstigster Organisation und mit gewünschter Frequenz beliebig oft ausgelesen wird.

2. Anordnung nach Anspruch 1,   d a d u r c h   g e k e n n z e i c h n e t ,   daß jeweils die erste in das Bildfenster der Filmbühne (11) einlaufende Zeile in ein elektrisches Videosignal umgewandelt wird.

3. Anordnung nach Anspruch 2, d a d u r c h
g e k e n n z e i c h n e t , daß zur Anpassung der
Abtastbereiche an Vor- und Rücklauf des Mikrofilms (13)
bzw. des Mikrofiches (25) ein kippbarer Spiegel im
Strahlengang zwischen Filmbühne und linearem Halbleiter-
Sensorelement angeordnet ist.

4. Anordnung nach Anspruch 3, d a d u r c h
g e k e n n z e i c h n e t , daß es sich um einen
halbdurchlässigen Spiegel handelt.

5. Anordnung nach Anspruch 2, d a d u r c h
g e k e n n z e i c h n e t , daß zur Anpassung der
Abtastbereiche an Vor- und Rücklauf des Mikrofilms (13)
bzw. Mikrofiches (25) zwei lineare Halbleiter-Sensorelemente (10) vorhanden sind, und zwar entsprechend der
Lage der beiden Randzeilen im Bildfenster der Filmbühne
(11).

6. Anordnung nach einem der Ansprüche 1 bis 5,
d a d u r c h   g e k e n n z e i c h n e t , daß im
Strahlengang zwischen Filmbühne (11) und linearem Halbleiter-Sensorelement (10) ein halbdurchlässiger Spiegel
angeordnet ist, der die von der Filmbühne (11) kommenden Strahlen einerseits zum bereits erwähnten Sensorelement (10) und andererseits zu einem optischen Bildwiedergabegerät weiterleitet.

7. Anordnung nach einem der Ansprüche 1 bis 6 zur Abtastung von Mikrofiches, d a d u r c h g e - k e n n z e i c h n e t , daß die Transporteinrich-tung ein zeilenweises Abtasten einer (21) von insgesamt mehreren Seiten (21, 22, 23, 24) auf dem Mikrofiche (25) von oben nach unten und ein Abtasten der seitlich benachbarten Seite (22) zeilenweise von unten nach oben ermöglicht, wobei das Einschreiben in den Bildwiederholspeicher (15) derart erfolgt, daß bei einem üblichen Auslesen aus dem Bildwiederholspeicher (15) die übliche Zeilen-Signalfolge des Bildsignals entsteht.

8. Anordnung nach einem der Ansprüche 1 bis 7, d a d u r c h g e k e n n z e i c h n e t , daß eine Prozeßsteuerung für den Bildwiederholspeicher (18, 19) vorhanden ist,durch die das Terminal (16, 17) sowohl als Sende- als auch als Empfangstation verwendbar ist.

9. Anordnung nach einem der Ansprüche 1 bis 8, d a d u r c h g e k e n n z e i c h n e t , daß der elektrische Ausgang mit dem Eingang eines Druckers verbunden ist.

10. Anordnung nach einem der Ansprüche 1 bis 8, d a d u r c h g e k e n n z e i c h n e t , daß der elektrische Ausgang mit dem Eingang eines Faksimilegerätes zur Hardcopy-Ausgabe verbunden ist.

11. Anordnung nach einem der Ansprüche 1 bis 10, d a d u r c h   g e k e n n z e i c h n e t , daß ein an sich bekanntes Zusatzgerät zur Einblendung einer verschiebbaren Marke in das Bild vorhanden ist.

12. Anordnung nach einem der Ansprüche 1 bis 11, d a d u r c h   g e k e n n z e i c h n e t , daß ein zusätzlicher Rückkanal vorhanden ist.

13. Anordnung nach einem der Ansprüche 1 bis 12, d a d u r c h   g e k e n n z e i c h n e t , daß ein zusätzlicher Sprechkanal vorhanden ist,

14. Anordnung nach einem der Ansprüche 1 bis 13, d a d u r c h   g e k e n n z e i c h n e t , daß zumindest ein Nachrichtenkanal als Zwei-Weg-Kanal ausgebildet ist.

15. Anordnung nach Anspruch 11,   d a d u r c h   g e k e n n z e i c h n e t , daß ein Schmalband-Zwei-Weg-Datenkanal zur Übermittlung der Position der Marke vorhanden ist.

FIG.1

FIG.2

Reg. 1851

0057748